# EUROPEAN PATENT SPECIFICATION

(11) **EP 1 821 456 B1**
(45) Date of publication and mention of the grant of the patent: **29.09.2010**
(21) Application number: 06110186.1
(22) Date of filing: 21.02.2006
(51) Int. Cl.: H04L 12/26, G06F 15/16

(54) **Protocol analyser arrangement, computer program product and method of managing resources**
Anordnung von Protokollanalysatoren, Computerprogrammprodukt und Verfahren zur Verwaltung von Ressourcen
Assemblée d'analyseurs de protocole, produit de programme informatique et procédé de gestion de ressources

(43) Date of publication of application: 22.08.2007
(73) Proprietor: NetHawk Oyj, 90570 Oulu (FI)
(72) Inventor: Sankala, Jouko, 90650, Oulu (FI); Taipale, Tapio, 90800, Oulu (FI)
(74) Representative: Antila, Harri Jukka Tapani

(56) References cited:
- WO-A-03/084134
- WO-A-2005/088906
- WO-A-2005/125246
- [Online] XP007900234 Retrieved from the Internet: URL:https://www.nethawk.fi/services/downlo ads/files/2005/9/1109758118/NetHawk_M51.0_ DataSheet.pdf>
- GURTOV A ET AL: "Multi-layer protocol tracing in a GPRS network" VTC 2002-FALL. 2002 IEEE 56TH. VEHICULAR TECHNOLOGY CONFERENCE PROCEEDINGS. VANCOUVER, CANADA, SEPT. 24 - 28, 2002, IEEE VEHICULAR TECHNOLGY CONFERENCE, NEW YORK, NY : IEEE, US, vol. VOL. 1 OF 4. CONF. 56, 24 September 2002 (2002-09-24), pages 1612-1616, XP010608701 ISBN: 0-7803-7467-3
- SOON-SUNG YANG ED - BHARGAVA V K ET AL: "Protocol compatibility tester for CDMA mobile system (CMS)" PERSONAL WIRELESS COMMUNICATIONS, 1996., IEEE INTERNATIONAL CONFERENCE ON NEW DELHI, INDIA 19-21 FEB. 1996, NEW YORK, NY, USA,IEEE, US, 19 February 1996 (1996-02-19), pages 96-101, XP010158294 ISBN: 0-7803-3177-X
- VARENNI G ET AL: "Optimizing packet capture on symmetric multiprocessing machines" COMPUTER ARCHITECTURE AND HIGH PERFORMANCE COMPUTING, 2003. PROCEEDINGS. 15TH SYMPOSIUM ON NOV. 10-12, 2003, PISCATAWAY, NJ, USA,IEEE, 10 November 2003 (2003-11-10), pages 108-115, XP010672038 ISBN: 0-7695-2046-4
- NetHawk: "New Formula for 3G Mobile Network Monitoring" 21 February 2005 (2005-02-21),

## Description

### Field

The invention relates to a protocol analyser arrangement, to an analyser module, to a method of managing resources of a protocol analyser arrangement, and to a computer program product.

### Background

Protocol analysers used in communications networks are used, for example, for measuring different functions of the data transmission systems. Protocol analysers are nowadays implemented as hardware and software implementations. In hardware implementations of the protocol analysers, multiprocessor techniques are often used in order to increase the equipment capacity. The multiprocessor technique is utilized inside protocol analyser equipment. The users are forced to decide whether to choose, for example, one analyser having a high capacity that can be used in one location at a time, or multiple analysers having smaller capacities. Multiple analysers can sometimes be used to build an analyser group where one of the analysers acts as a server/master and the other analysers in the group are its clients/slaves. In a server-client architecture each computer or process on the network is either a client or a server. Server software generally runs on powerful computers and clients get all or most of their information and rely on the application server for things such as configuration files. In a master/slave relationship between devices, the direction of control is always from the master to the slaves. An example of a master-slave type analyser group is described in a document "NetHawk M5 Multi-Analyser for monitoring wireless networks", Data sheet version 1.0, 2005, pages 1-4. The downsides of the analyser systems described above are inflexibility and unreliability. For example, if the server analyser gets overloaded, the performances of all client analysers are hugely affected. Further, all the resources of an analyser system cannot be utilized effectively.

The data transmission systems are developing rapidly, and thus, also the analyser systems used in connection with the networks require continuous development. Thus, analyser systems that are easily modifiable to adjust to new situations are highly needed.

### Brief description of the invention

An object of the invention is to provide an improved protocol analyser arrangement, an improved analyser module, an improved method of managing resources of a protocol analyser arrangement, and an improved computer program product encoding a computer program of instructions for executing a computer process for managing resources of a protocol analyser arrangement.

According to an aspect of the invention, there is provided a protocol analyser arrangement as specified in claim 1.

According to another aspect of the invention, there is provided a method of managing resources of a protocol analyser arrangement as specified in claim 10.

According to another aspect of the invention, there is provided a computer program product encoding a computer program of instructions for executing a computer process for managing resources of a protocol analyser arrangement as specified in claim 18.

The invention provides several advantages. Flexible, easily modifiable distribution architecture is achieved. Resource sharing is effective without the need for separate servers and clients. Performance and reliability are increased. Performance of modern multi-core CPUs can be fully utilized.

### List of drawings

In the following, the invention will be described in greater detail with reference to the embodiments and the accompanying drawings, in which
Figure 1 shows an example of a data transmission system and a protocol analyser;
Figure 2 shows an example of a data transmission system and a protocol analyser arrangement according to an embodiment of the invention;
Figure 3 shows a top-level structural view of conceptual analyser architecture;
Figure 4 shows an overview of a conceptual structure of analyser architecture;
Figure 5 shows an example of a conceptual structure of an analyser module;
Figures 6 to 9 show examples conceptual structures of analyser module arrangements;
Figures 10 to 13 show signal sequence diagrams illustrating different methods of managing resources of a protocol analyser arrangement;
Figure 14 shows an overview of protocol layer decoding divided into multiple processes; and
Figures 15 and 16 show examples of a data transmission system and a protocol analyser arrangement.

### Description of embodiments

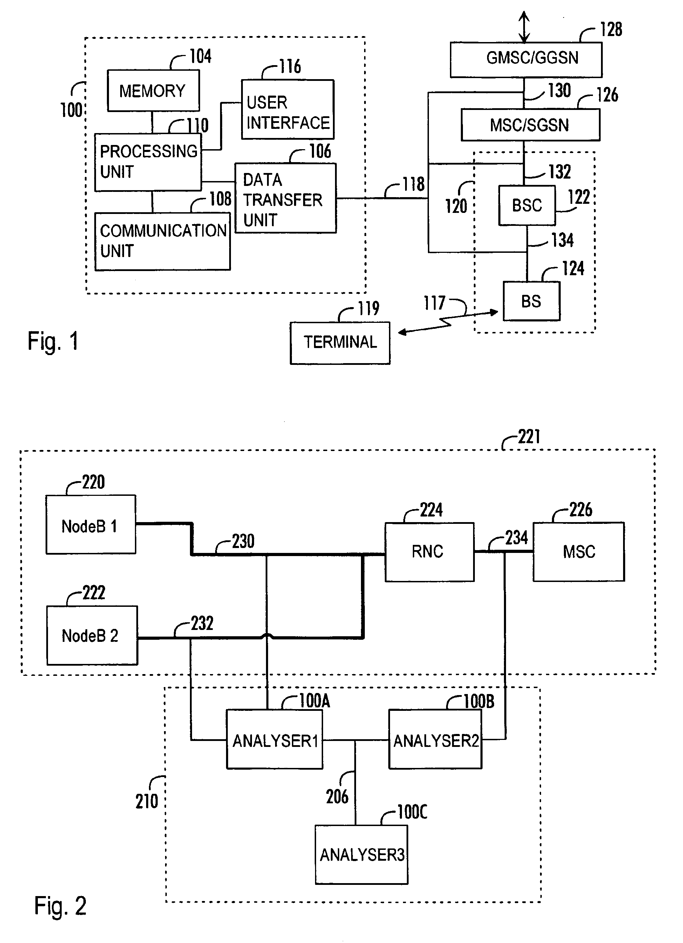

With reference to Figure 1, examine an example of a data transmission system in which embodiments of the invention can be applied. The data transmission system may be based on for instance GSM (Global System for Mobile Communication), WCDMA (Wideband Code Division Multiple Access) or CDMA (Code Division Multiple Access) technology.

The data transmission system corresponds for instance to a combined structure of the GSM and the GPRS (General Packet Radio Service) systems. The GSM network elements are responsible for the implementation of circuit-switched connections and the GPRS network elements are responsible for the packet-switched connections. However, some of the network elements may belong to both systems.

A switching centre 126 represents a mobile services switching centre MSC and a serving GPRS support node SGSN, which make circuit-switched and packet-switched connections possible in the data transmission system. The data transmission network comprises a gateway 128 comprising a gateway mobile services switching centre GMSC and a gateway GPRS support node GGSN. The GMSC attends to the circuit-switched connections between the data transmission network and external networks, such as the public land mobile network PLMN or the public switched telephone network PSTN, and the GGSN attends to the packet-switched connections between the data transmission network and external networks, such as the Internet.

The switching centre 126 controls a radio access network RAN 120 comprising at least one base station controller BSC 122. The base station controller 122 controls at least one base station 124. The base station controller 122 can also be referred to as a radio network controller and the base station 124 can be referred to as node B. A terminal 119 of the data transmission system may communicate with, for instance, at least one base station 124 through an air interface 117.

An analyser 100 may communicate with the data transmission system using fixed cable connections, GSM/GPRS/EDGE connections or for example short-range wireless connections, such as Bluetooth, infrared or WLAN (Wireless Local Area Network) connections. A connection 118 between the analyser 100 and the data transmission system may be connected for instance to one or more lines 130, 132, 134 between data transmission system elements 124, 122, 126, 128.

The analyser 100 shown in Figure 1 is for instance a protocol analyser used for measuring the operation of data transmission systems, a simulator or an interface card. The analyser 100 may be a personal computer provided with for instance Windows® or some other operating system connected to interfaces 117 to be measured by means of network cards and measuring sensors. The analyser 100 comprises a processing unit 110 controlling the operations of the device and a data transfer unit 106. What is meant by the processing unit 110 is a block controlling the operation of the devices, the block currently being typically implemented as a processor including software, but different hardware implementations are also possible, for instance a circuit constructed of separate logic components or one or more application-specific integrated circuits (ASIC). A combination of the different implementations is also possible. The data transfer unit 106 may include a transceiver and an antenna by which the analyser 100 receives and transmits signals. The data transfer unit 106 is configured to be connected to the data transmission system and to capture data including messages from the data transmission system. The captured data includes both user data and signalling messages. The data transfer unit 106 further includes a time stamping unit that gives time stamps to the captured data. The time stamp is synchronized to a high accuracy clock, for example to a GPS (global positioning system) time received from a GPS receiver that is connected to the data transfer unit 106.

The processing unit 110 handles the captured data processing. The processing unit 110 comprises the actual analyser software consisting of an input decoding analysis and an Ul subsystem, for example. A communication unit 108 is responsible for communications between different analysers 100.

The analyser 100 may also comprise a user interface 116 that allows controlling the operations of the device 100 and monitoring the operations carried out by the device 100. The user interface 116 comprises a display and a keyboard, for instance. Depending on the device 100, the user interface 116 may comprise various user interface parts. The analyser 100 may also comprise a memory 104 and many other different elements.

Figure 2 shows an example of a data transmission system 221 and a protocol analyser arrangement 210 according to an embodiment. In an embodiment, the protocol analyser arrangement 210 comprises more than one protocol analyser module 100A, 100B, 100C. The analyser modules 100A, 100B, 100C are configured to communicate with one another, thus forming a cluster of the analyser modules 210. Any analyser module 100A, 100B, 100C is further configured to share processing resources of the analyser module with one or more other analyser modules in the cluster of the analyser modules.

In the exemplary embodiment of Figure 2, the first analyser module 100A monitors two lub interfaces 230, 232 between Node B 1 220 and the RNC (Radio Network Controller) 224, and between Node B 2 222 and the RNC 224. The second analyser module 100B monitors an lu interface 234 between the RNC 224 and the MSC 226.

In an embodiment, a lub call trace application runs in the first analyser module 100A. The lub call trace application can run basicly in any analyser module but in order to minimize communication between analysers, it advantageously runs in the first analyser module 100A. Accordingly, the lu call trace application may run in the second analyser module 100B.

Whenever a user wants to monitor all calls, the user can start correlating call trace on any of the analyser modules 100A, 100B, 100C. The correlating call trace subscribes call trace results from all call traces and shows the correlated call trace. Correlating call trace could be executed in the third analyser module 100C. All call trace Uls (User Interfaces) may be executed in the third analyser module 100C in case the user of the third analyser module 100C wants to view all call traces.

Each analyser module 100A, 100B, 100C in the protocol analyser arrangement further includes a communication unit 108 coupled to the processing unit for communicating with one or more other communication units of the more than one analyser module thus forming a cluster of the analyser modules. The analyser modules 100A, 100B, 100C are connected together using a high speed network, for example a gigabit Ethernet network that forms a distribution interface 206 between the analyser modules. The communication unit 108, as shown in Figure 1, provides a listening service that listens incoming connection requests from other analyser modules and takes care of starting up analyser software.

In an embodiment, the data transfer unit 106 can also contain at least one of input, decoding and analysis subsystems. In that case, the data transfer unit 106 may also become a distributed analyser. It is possible that one analyser module only includes a part of an input, decoding or analysis subsystem, and other parts of the subsystem are included in one or more other analyser modules of the analyser arrangement.

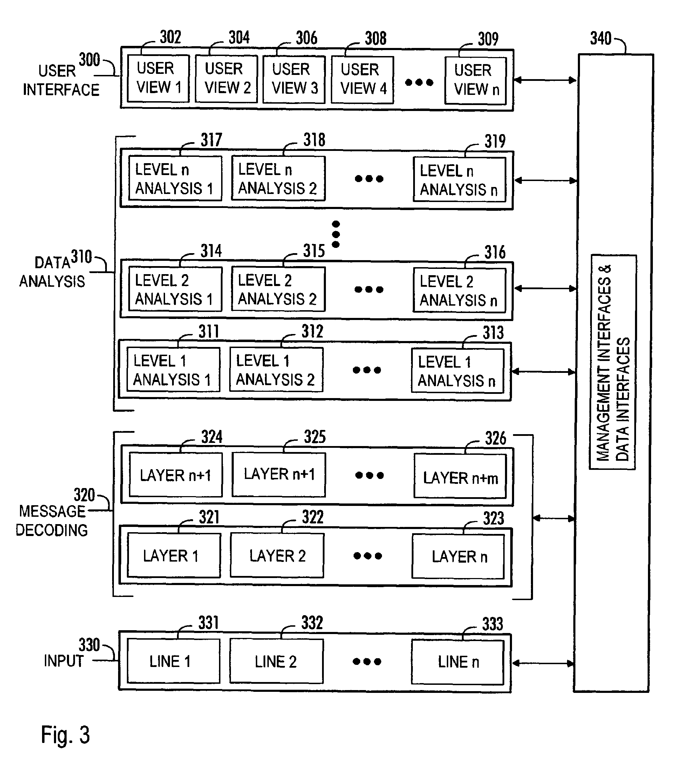

Figure 3 shows a top-level structural view of conceptual analyser architecture. Different subsystems in the analyser architecture are responsible for different tasks to be performed. In the embodiment of Figure 3, the analyser architecture comprises a user interface subsystem 300, a data analysis subsystem 310, a message decoding subsystem 320, and input subsystem 330. Further, management interfaces and data interfaces 340 block manages all the other subsystems.

The user interface subsystem 300 may include one or more user view blocks 302, 304, 306, 308, 309 depending on how many user interfaces are needed in the analyser arrangement. It is possible that only one user interface is needed in one analyser module of the cluster of analyser modules of the arrangement. It is also possible to include user interfaces in all the analyser modules in the arrangement and thus, the number of the user view blocks 302, 304, 306, 308, 309 grows higher depending on the number of the analyser modules in the arrangement.

Depending on the number of data transfer units required in the analyser arrangement, the number of line blocks 331, 332, 333 in the input subsystem 330 may vary. In some situations, it may be preferred to use several analyser modules for measuring monitored network interfaces, for example, in heavy traffic load situations. Further, more than one line blocks 331, 332, 333 may be implemented in just one analyser module. It is also possible that some analyser modules are not directly connected to the monitored network at all.

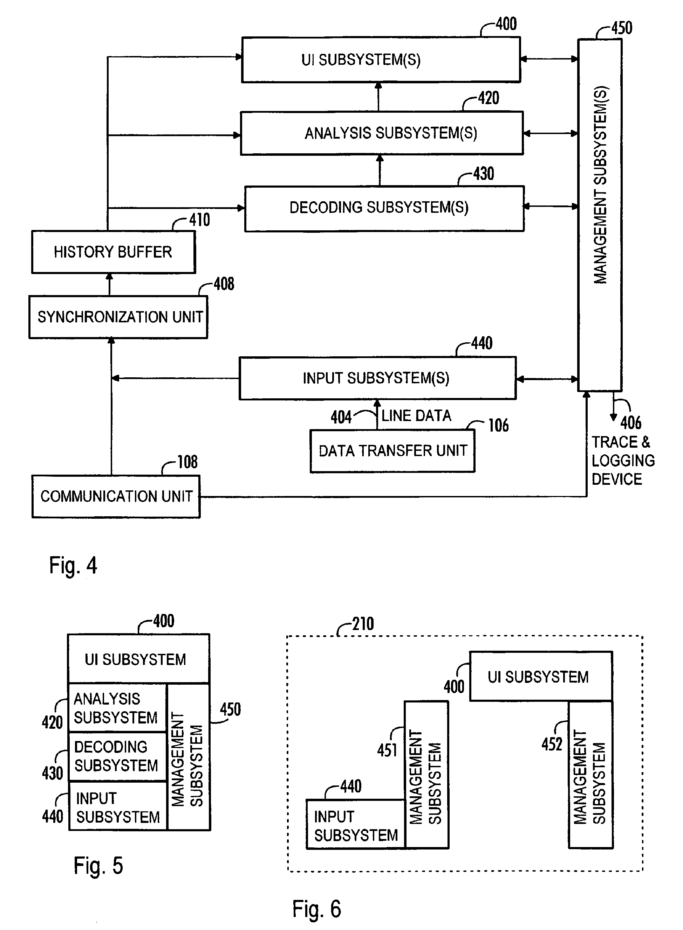

The message decoding subsystem 320 is responsible for decoding of the captured data in the decoding layers 321, 322, 323, 324, 325, 326 of the decoding stacks. In the simplified example of Figure 4, the first decoding stack includes the decoding layers 321 and 324, the second decoding stack includes the decoding layers 322 and 325 and the n^{th} decoding stack includes the decoding layers 323 and 326. The different decoding layers and stacks may be implemented in one or more analyser modules of the protocol analyser arrangement. A message decoding system is further described in Finnish patent application no. 20055239.

Finally, the data analysis subsystem 310 is responsible for implementing data analysis on the received, decoded message data. The data analysis can be executed in different levels (LEVEL 1, LEVEL 2, LEVEL n). For example, the first analysis that starts on level one 311 may be continued on level two 314 and all the required analysis steps of the first analysis are completed on level n 317. The different analysis on different levels 311 to 319 may be executed on one or more analyser modules of the protocol analyser arrangement.

Figure 4 shows an overview of a conceptual structure of analyser architecture. The management subsystem(s) 450 manages the distribution of functions between all the other subsystems. It may provide data to a trace & logging device 406. The management subsystem(s) 450 provides management information to the different subsystems in a management session.

Data handling can be implemented using a subscribe-delivery method. Each block of a subsystem subscribes the data it needs from other blocks. For example, when an application is set up, message-decoding results from respective decoding blocks are subscribed. Further, decoding blocks may subscribe the data needed from respective input blocks. In case the subscription is from a remote source, the subscription may be serialized and sent to a remote analyser. Deliveries from the remote analysers are handled via a synchronization unit 408 and a history buffer 410.

The captured data from a data transfer unit 106 via a line 404 is received in the input subsystem(s) 440. The captured data is then delivered to the decoding subsystem(s) 430 via the synchronization unit 408 and the history buffer 410. The synchronization unit 408 is coupled between the history buffer 410 and the input subsystem 440 and a communication unit 108. The synchronization unit 408 implements a small buffer between these different data sources 440, 108 and the history buffer 410. A purpose of the synchronization unit 408 is to eliminate a transfer delay that may occur between remote and local data sources. Management messages between analysers are not time synchronized but transferred directly from the communication unit 108 to the management subsystem 450. Other messages transferred between analysers are synchronized and thus contain a send time stamp that is used in the synchronization unit to organize messages. The time stamps are set according to the time stamps of the captured messages in the sending side. Organized data is stored to a ring buffer called the history buffer 410.

An application chain synchronizes data handling between different analyser sessions. The application chain starts from the history buffer that buffers received data and delivers it to upper subsystems 430, 420 and 400 for handling. In case there are parallel application chains running, for example, for handling different distribution setups, the history buffer is instantiated for each application chain and data is thus handled separately. In case of a distributed analyser setup, the history buffer of the remote analysers 100A, 100B works in pass through mode and the history buffer of the local analyser 100C takes care of data buffering. The user can control data analysis by controlling the history buffer. When data analysis is stopped, the history buffer stops delivering messages and starts buffering messages. When the analysis is started, the history buffer delivers the buffered messages. An example of a history buffer is described in Finnish patent application no. 20055224.

The decoded information is delivered from the decoding subsystem(s) to the analysis subsystem(s) 420. The analysis subsystem(s) 420 provides user information to the UI subsystem(s) 400. The user of the analyser arrangement can communicate with the analyser arrangement via the UI subsystem(s) 400.

The performance of the arrangement is improved, for example, because different analysers can be used to monitor different interfaces and interface related applications might communicate for sharing data. Interface related applications advantageously run in the analysers that analyse related interfaces. In case of high-speed traffic monitoring, different analysers can be used to monitor the same interfaces.

The distribution of resources is possible between all the subsystems. The management subsystem 450 controls the distribution. The following diagrams of Figures 5 to 9 are examples of possible distribution setups. It is possible that there are several different distribution setups running concurrently in an analyser in different application chains.

Figure 5 shows an example of a conceptual structure of an analyser module. In this example, all the subsystems 400, 420, 430, 440, 450 are in the same physical unit, and for example, one user at a time uses the analyser locally. It is possible that all the analyser modules in the analyser arrangement respond to the analyser module of Figure 5.

Figures 6 to 9 show examples of conceptual structures of analyser module arrangements.

Figure 6 shows an example of a distributed analyser arrangement 210 where data is captured in the first analyser module and results are shown in the second analyser module Ul. The first analyser module thus includes an input subsystem 440 and a management subsystem 451. The second analyser module includes an Ul subsystem 400 and a management subsystem 452. This setup can be used, for example, when displaying raw data from remote inputs or recording raw data.

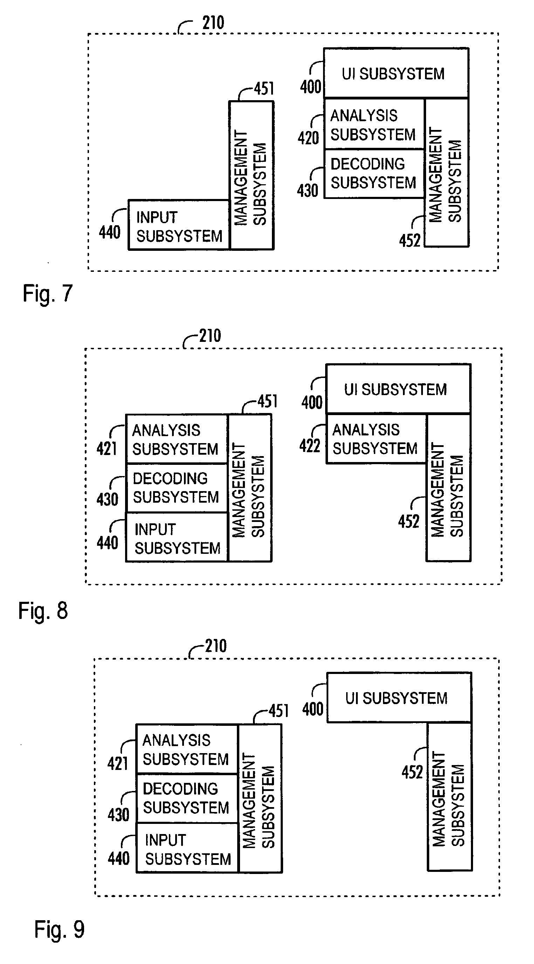

Figure 7 shows an example of a distributed analyser arrangement 210 where data is captured in the first analyser module and results are decoded, analysed and shown in the second analyser module Ul. The first analyser module includes an input subsystem 440 and a management subsystem 451. The second analyser module includes a decoding subsystem 430, an analysis subsystem 420, an Ul subsystem 400 and a management subsystem 452. This setup can be used, for example, when displaying decoded data from remote inputs.

Figure 8 shows an example of a distributed analyser arrangement 210 where data is captured, decoded and analysed in the first analyser module and some further analysis is done in the second analyser module. The results are shown in the second analyser module Ul. The first analyser module includes an input subsystem 440, a decoding subsystem 430, an analysis subsystem 421 and a management subsystem 451. The second analyser module includes an analysis subsystem 422, an UI subsystem 400 and a management subsystem 452. This setup is used for example in the call trace example above.

Figure 9 shows an example of a distributed analyser arrangement 210 where data is captured, decoded and analysed in the first analyser module and results are shown in the second analyser module Ul. The first analyser module includes an input subsystem 440, a decoding subsystem 430, an analysis subsystem 421 and a management subsystem 451. The second analyser module includes an Ul subsystem 400 and a management subsystem 452. This setup can be used, for example, when monitoring call trace results of the first analyser module from the second analyser module.

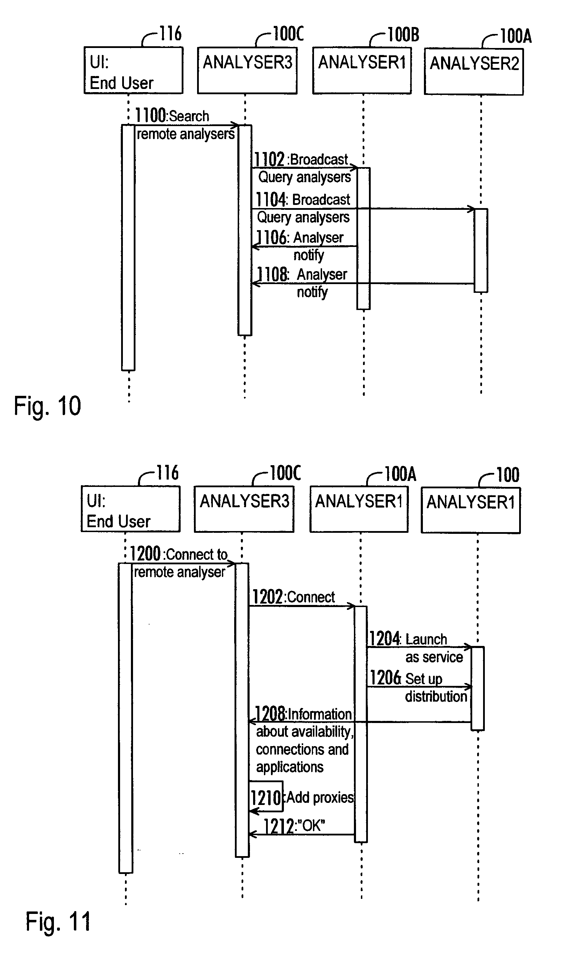

Figures 10 to 13 show signal sequence diagrams illustrating different methods of managing resources of a protocol analyser arrangement. Figures 10 to 13 illustrate how to set up a distributed call trace system in an analyser according to an exemplary embodiment shown in Figure 2.

Figure 10 illustrates an example of searching remote analyser modules. In 1100, an analyser module 3 (100C) receives a request for searching remote analyser modules from the Ul 116. On the basis of the received request, the analyser module 3 (100C) broadcasts a query for analyser resources to the analyser module 1 (100B) in 1102, and to the analyser module 2 (100A) in 1104. The listener services of the analyser modules 1 and 2 (100B, 100A) accept connections from the analyser module 3 (100C) and reply with analyser notify messages to the sender in 1106 and 1108. The analyser module 3 (100C) is now aware of available analyser modules 1 and 2 (100B, 100A).

Figure 11 illustrates an example of querying remote analyser resources. In 1200, an end user 116 establishes a connection by selecting one of the known remote analyser modules: analyser module 1. Analyser module 3 (100C) sends connect message to analyser module1 (100A) in 1202. On the remote side, in analyser module 1 listener 100A, the listener service starts an analyser application as service in 1204 (in case it is not already running) and sets up distribution between local 100C and remote analyser modules 100A, 100 in 1206. The analyser application adds connection information into its connection memory in 1208. The connection information may include information about available lines, connections and applications, for example. In 1210, the analyser module 3 (100C) adds proxies for received lines, connections and applications. In 1212, the analyser module 1 sends an "OK" message to the local analyser module 3 (100C). The remote lines, connections and applications can be shown in the Ul 116 so that the user is aware of which items are local and which are remote. An analyser module 2 can be started identically. Thus, in an embodiment, the local analyser module (100C) can send queries for resources from remote analyser modules (100A), and then display the available resources and their status in the Ul 116.

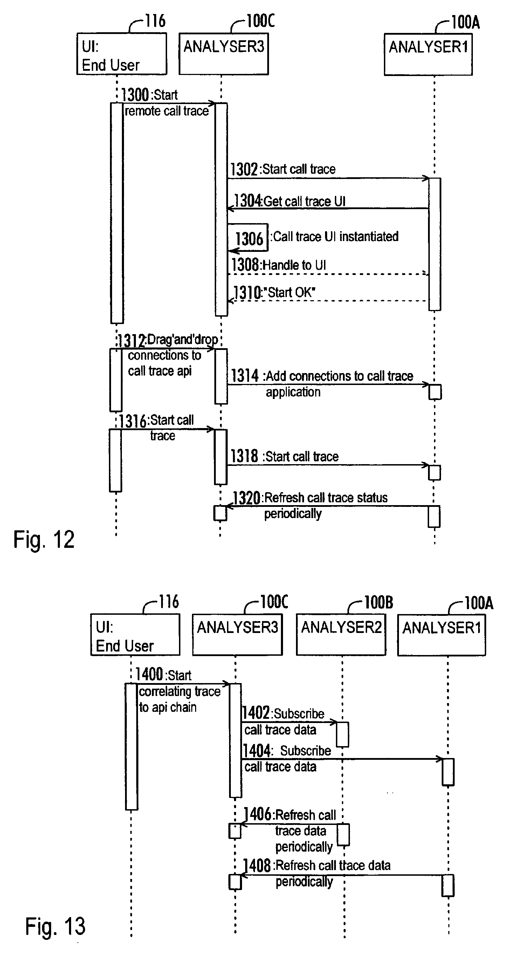

Figure 12 illustrates an example of managing remote call trace between analyser modules. In 1300, an end user (via Ul 116) starts remote call trace from a local analyser, analyser module 3 (100C), to a remote analyser, analyser module 1 (100A). The local analyser, the analyser module 3, sends a start call trace command to the remote analyser, analyser module 1, in 1302. A call trace application engine is started in the analyser module 3, and it asks for a call trace handle from the analyser module 1 by sending a get call trace Ul command to the analyser module 3 in 1304. A call trace Ul application is started in 1306 and a handle for it is sent to the analyser module 1 in 1308. Call trace is now running remotely in the analyser module 3 and its Ul is displayed in the local analyser, analyser module 1 in 1310.

The user adds physical connections to be captured to call trace in 1312. The connections are drag 'n' dropped to the local Ul, which relays connection information to the remote engine. Connections are sent to the remote analyser 100A in 1314. The remote analyser 100A activates connections to the call trace engine. The user starts call trace in 1316, and a start call trace command is sent to remote analyser in 1318. Call trace results are updated periodically to the local analyser in 1320, and the call trace Ul may then display the updated results. Call trace on analyser module 2 can be started the same way.

Figure 13 illustrates an example of another phase of setting up a distributed call trace. The end user starts correlating, via Ul 116, a call trace application with a local analyser module 3 (100C) in 1400. Call trace subscribes call trace results from a remote analyser module 2 (100B) in 1402 and from a remote analyser module 1 (100A) in 1404. In 1406 and 1408, the call trace data is delivered periodically to the analyser module 3 that uses the call trace data to make correlative call trace and displays the results in the Ul 116.

When the distributed call trace system setup is completed, the analyser modules 100A, 100B and 100C run subsystems described in Figure 8. The analyser module 3 100C is running analysis, Ul and management subsystems, and the analyser module 1 100A and the analyser module 2 100B are running input, decoding, analysis and management subsystems. The analysis modules (call traces) from analysers 1 and 2 are communicating with the analysis module (correlating call trace) in the analyser module 3, thus providing a distributed call trace system.

At the same time, the user of the analyser module 2 can start another measurement setup, for example a protocol monitor to the analyser module 2. The user of the analyser module 2 can share the same inputs that were used for the call trace application, but data will be delivered to another application chain, so that actions done in different analysis sessions do not distribute each other.

A multi-core microprocessor is one which combines more than one independent processor into a single package. The number of cores will increase in new processors. Therefore it is important to have a solution in which processing can be easily shared with multiple threads that can be run at the same time and, thus, fully utilize the performance of multi-core microprocessors. Sharing protocol analysis with multiple cores is not an easy task because the order of messages has to be restored in the analysis in order to successfully follow protocol sequences. In case of dynamic stack implementations, where decoding settings for different protocol layers are captured from monitored signalling, upper layer decoding or next message decoding is often dependent on current message decoding. Due to this, different decodings cannot be easily shared with different threads. In an embodiment, efficient sharing of processing in multi-core systems with multiple execution threads is enabled.

The disclosed distribution architecture can also be used for sharing processing with multiple threads and, thus, fully utilize the performance of a multi-core microprocessor. It is also possible that processing is shared between the data transfer unit and the processing unit. It is also possible that a separate processor card is included in the protocol analyser.

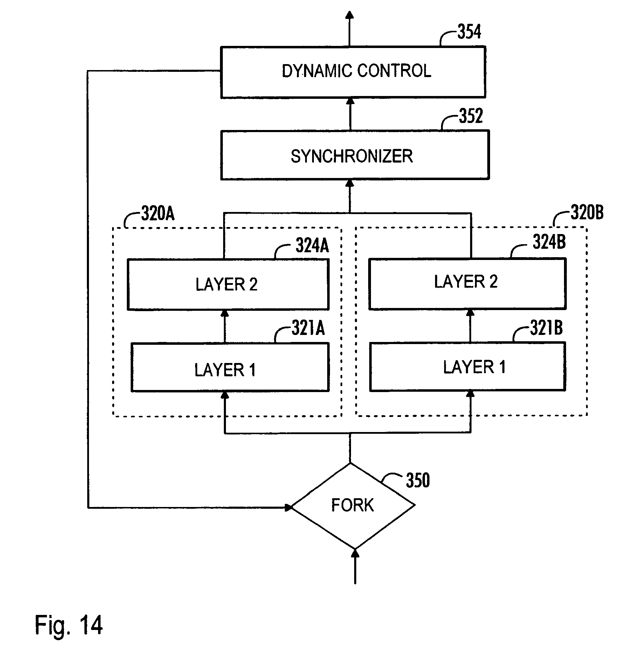

Figure 14 illustrates an example of sharing protocol decoding with different processing threads. In the example of Figure 14, two different processing threads 320A and 320B are used. Protocol decoding is the part of protocol analysis that takes most of the processing power. In an embodiment, processing is shared with different threads in vertical direction within protocol stacks, that is, the monitored connections terminating to the same network elements are analysed in a single thread from the bottom to the top layer. For example, in case of monitoring multiple lub interfaces, connections proceeding to the first terminal are analysed in the first processing thread starting from the lowest layer 321A, 321B analysis, for example from AAL2 analysis, and proceeding to top layer 324A, 324B analysis, for example to IP layer analysis. The signalling is followed by a dynamic control component 354 that detects and follows the connections terminating to the same network elements. The dynamic control component 354 provides information related to connections to a fork component 350 that creates multiple parallel decoding processes 320A, 320B, and delivers captured data according to connections to different processes for decoding. Decoded data is synchronized in a synchronization component 352 prior to delivering it to the upper blocks. The synchronization is performed either such that the decoded data order is maintained in chronological order or such that the decoded data related to a first connection is delivered before delivering decoded data related to a second connection.

Different input blocks in input subsystems can also be executed in separate threads and data synchronization can be performed in the synchronization unit 408 according to Figure 4. The handling of captured and decoded data can also be shared with different processing threads in horizontal direction whenever communication with lower layers is limited, for example, UI views can be executed in separate threads.

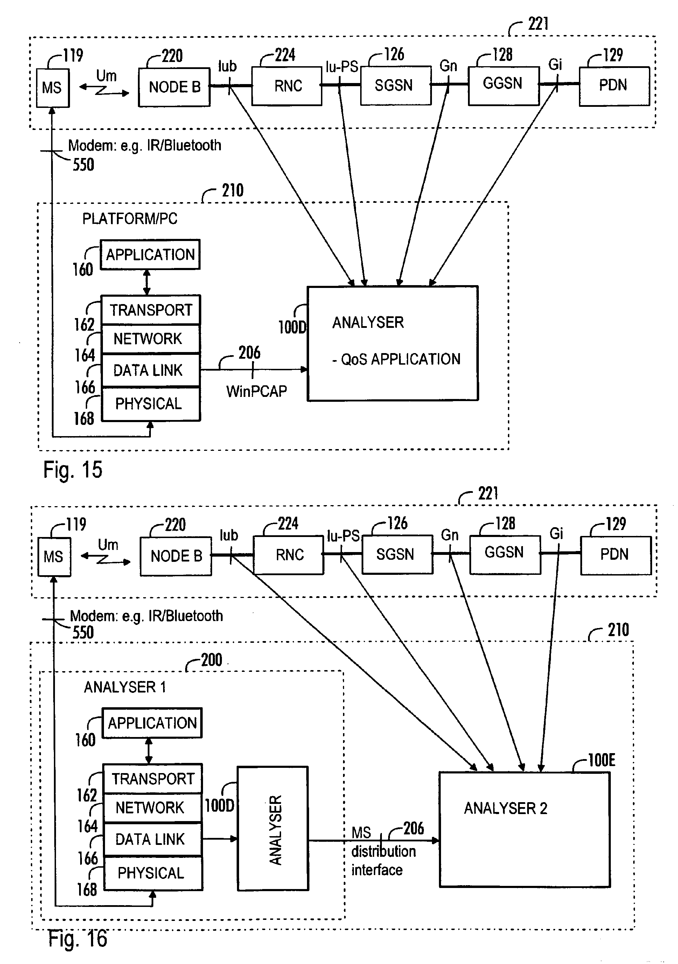

Next, embodiments of the invention where QoS (Quality of Service) is measured over an air interface are described. It is known to monitor QoS over several interfaces. Typically, special tools are needed to monitor QoS over an air interface, for example special monitoring mobile phone that provides access to a user plane data and to measurement results. The described embodiments enable QoS monitoring over an air interface without the need for any special monitoring phones. A possibility of measuring PS service QoS values (e.g. delay, throughput, jitter, retransmission) over an air interface is highly advantageous. Figures 15 and 16 show examples of data transmission systems 221 and protocol analyser arrangements 210 that enable air interface measurements.

In the example of Figure 15, an analyser module is installed into a same test Platform/PC, which is used to transfer application data, such as FTP (file transfer protocol) packets (with help of a terminal), from and to the PDN (packet data network). The platform/PC includes, for example, the following layers: an application layer 160, a transport layer 162, a network layer 164, a data link layer 166, and a physical layer 168. The physical layer 168 may communicate with the terminal 119 via a modern connection 550 (e.g. IR (infra red)/Bluetooth), for example. For example, a WinPCAP or respective standard packet capture driver can act as an input source for the analyser module 100D providing packets from the data link layer 166 of the application transport bearer. The same IP (Internet protocol) packets that are sent from (or received at) a test PC can be monitored on terrestrial interfaces for QoS measurements. Thus, it is possible e.g. to calculate IP transport delay over an air Interface (UE <-> NodeB). Throughput after and before the air interface can also be measured.

The arrangement of Figure 15 can be used, for example, for verification of the QoS for the whole PS service line including a Um interface between a terminal 119 and a NodeB 220, a lub interface between the NodeB 220 and RNC 224, a lu-PS interface between the RNC 224 and SGSN 126, a Gn interface between the SGSN 126 and GGSN 128, and a Gi interface between the GGSN 128 and PDN 129. In an embodiment, measuring of an IP transport delay over an air interface (Uu) can also be performed. Further, the measuring of IP, UDP (user datagram protocol) and/or TCP(resending) throughput after and before an air interface (Uu) is enabled.

In the example of Figure 16, the analyser 200 that monitors the internal IP stack runs in a different physical unit and connects to other analyser modules 100E via a distribution interface 206. The distribution interface 206 is provided, for example, over a 3G packet data connection. In that way, the analyser arrangement can be used as a drive test tool. There can be a QoS application running on both analyser modules 200, 100E. The QoS application in the analyser module 2 (100E) can subscribe to results of the QoS application running in the analyser module 1 (200) and combine the results. Because a data connection may sometimes be lost, the data subscribed from the analyser module 1 may be queued in the analyser module 1 and then sent to the analyser module 2 whenever possible. In this case, the correlating QoS application running in the analyser module 2 can be implemented such that it can handle late data deliveries received from the QoS application 100D of the analyser module 1.

The embodiments of the invention may be realized in a protocol analyser arrangement comprising at least a processing unit for controlling functions of the analyser module in each of the analyser modules of the arrangement. The processing unit may be configured to perform at least some of the steps described in connection with Figures 10, 11, 12 and 13. The embodiments may be implemented as a computer program comprising instructions for executing a computer process for managing resources of a protocol analyser arrangement.

The computer program may be stored on a computer program distribution medium readable by a computer or a processor. The computer program medium may be, for example but not limited to, an electric, magnetic, optical, infrared or semiconductor system, device or transmission medium. The computer program medium may include at least one of the following media: a computer readable medium, a program storage medium, a record medium, a computer readable memory, a random access memory, an erasable programmable read-only memory, a computer readable software distribution package, a computer readable signal, a computer readable telecommunications signal, computer readable printed matter, and a computer readable compressed software package.

Even though the invention has been described above with reference to an example according to the accompanying drawings, it is clear that the invention is not restricted thereto but it can be modified in several ways within the scope of the appended claims.

## Claims

1. A protocol analyser arrangement, comprising more than one analyser module (100A, 100B, 100C) including:
at least a processing unit (110) for controlling functions of the analyser module in each of the analyser modules;
a data transfer unit (106) coupled to the processing unit for communicating data with a data transmission system (221) in at least one analyser module; and
a communication unit (108) coupled to the processing unit for communicating with one or more other communication units of the more than one analyser module, the more than one analyser module forming a cluster of analyser modules (210);
and a processing unit (110) of any analyser module of the cluster of the analyser modules is configured to share processing resources of the analyser module with one or more other analyser modules in the cluster of the analyser modules;
**characterized in that** at least one of the more than one analyser module is a local analyser module (100A) and at least one of the more than one analyser module is a remote analyser module (100B),
the local analyser module (100A) is configured to send a request to one or more remote analyser modules (100B, 100C) for utilizing processing resources of the one or more remote analyser modules (100B, 100C),
the one or more remote analyser modules (100B, 100C) are connected to a data transmission system (221) under test by using a packet data modem (118), and configured to perform a quality of service measurement, and to send the result of the performed quality of service measurement over a packet connection to the local analyser module (100A),
and the local analyser module (100A) is configured to measure quality of service from at least one interface of the data transmission system (221), and to combine the quality of service measurement results received from the one or more remote analyser modules with the measured quality of service for forming a quality of service value of the at least one interface of the data transmission system (221).

2. The analyser arrangement of claim 1, **characterized in that** the local analyser module (100A) is further configured to receive subscription data subscribed from one or more remote analyser modules (100B, 100C) in the cluster of the analyser modules, and to process data on the basis of the received subscription data.

3. The analyser arrangement of claim 2, **characterized in that** the local analyser module (100A) is further configured to analyse data received from one or more remote analyser modules (100B, 100C) in the cluster of the analyser modules.

4. The analyser arrangement of claim 1, **characterized in that** the local analyser module (100A) is further configured to send a request to one or more remote analyser modules (100B, 100C) in the cluster of the analyser modules for utilizing processing resources of the one or more remote analyser modules.

5. The analyser arrangement of claim 1, **characterized in that** at least one of the more than one analyser module is a local data source and at least one of the more than one analyser module is a remote data source, and wherein each analyser module further includes a synchronization unit (408) for synchronizing data communication between local and remote data sources according to message time stamps.

6. The analyser arrangement of claim 1, **characterized in that** the analyser arrangement further comprises an input subsystem (330), a decoding subsystem (320), and an analysis subsystem (310) in one or more of the more than one analyser module (100A, 100B, 100C).

7. The analyser arrangement of claim 6, **characterized in that** at least one of the input subsystem (330), the decoding subsystem (320) and the analysis subsystem (310) resides in a different analyser module (100A, 100B, 100C) than the other subsystems.

8. The analyser arrangement of claim 6, **characterized in that** at least part of the input subsystem (330), the decoding subsystem (320) or the analysis subsystem (310) resides in more than one analyser module (100A, 100B, 100C).

9. The analyser arrangement of claim 1, **characterized in that** at least one analyser module in the cluster of the analyser modules comprises a user interface unit (116) for receiving user input.

10. A method of managing resources of a protocol analyser arrangement, the method comprising:
providing more than one analyser module (100A, 100B, 100C) in a protocol analyser arrangement;
communicating data with a data transmission system by at least one of the analyser modules of the protocol analyser arrangement;
communicating (1102, 1106, 1108), by each analyser module, with one or more other analyser modules, the more than one analyser module forming a cluster of analyser modules; and
sharing (1208, 1406, 1408) processing resources of an analyser module with one or more other analyser modules in the cluster of the analyser modules;
**characterized in that** at least one of the more than one analyser module is a local analyser module (100A) and at least one of the more than one analyser module is a remote analyser module (100B), and the method further comprises:
sending, by a local analyser module (100A), a request to one or more remote analyser modules (100B, 100C) for utilizing processing resources of the one or more remote analyser modules;
connecting the one or more remote analyser modules (100B, 100C) to a data transmission system (221) under test by using a packet data modem (118);
performing, by the one or more remote analyser modules (100B, 100C), a quality of service measurement;
sending the result of the performed quality of service measurement over a packet connection to the local analyser module (100A);
measuring, by the local analyser module (100A), quality of service from at least one interface of the data transmission system (221); and
combining the quality of service measurement results received from the one or more remote analyser modules with the measured quality of service for forming a quality of service value of at least one interface of the data transmission system (221).

11. The method of claim 10, **characterized by** receiving, in a local analyser module (100A), subscription data subscribed from one or more remote analyser modules (100A, 100B), and processing data on the basis of the received subscription data in the local analyser module (100A).

12. The method of claim 11, **characterized by** analysing, in a local analyser module (100A), the subscription data received from the at least one remote analyser module (100B, 100C).

13. The method of claim 10, **characterized by** providing each analyser module with a synchronization unit (408) for synchronizing data communication between local and remote data sources according to message time stamps.

14. The method of claim 10, **characterized by** providing an input subsystem (330), a decoding subsystem (320), and an analysis subsystem (310) in one or more of the more than one analyser module (100A, 100B, 100C).

15. The method of claim 10, **characterized by** providing at least one of the input subsystem (330), the decoding subsystem (320) and the analysis subsystem (310) in a different analyser module (100A, 100B, 100C) than where the other subsystems are.

16. The method of claim 10, **characterized by** providing at least part of the input subsystem (330), the decoding subsystem (320) or the analysis subsystem (310) in more than one analyser module (100A, 100B, 100C).

17. The method of claim 10, **characterized by** providing a user interface unit (116) for receiving user input in at least one analyser module in the cluster of the analyser modules.

18. A computer program product encoding a computer program of instructions for executing a computer process for managing resources of a protocol analyser arrangement, the process comprising:
providing more than one analyser module (100A, 100B, 100C) in a protocol analyser arrangement;
communicating data with a data transmission system by at least one of the analyser modules of the protocol analyser arrangement;
communicating, by each analyser module, with one or more other analyser modules, the more than one analyser module forming a cluster of analyser modules;
sharing processing resources of an analyser module with one or more other analyser modules in the cluster of the analyser modules
**characterized in that** at least one of the more than one analyser module is a local analyser module (100A) and at least one of the more than one analyser module is a remote analyser module (100B), and the process further comprises:
sending, by a local analyser module (100A), a request to one or more remote analyser modules (100B, 100C) for utilizing processing resources of the one or more remote analyser modules;
connecting the one or more remote analyser modules (100B, 100C) to a data transmission system (221) under test by using a packet data modem (118);
performing, by the one or more remote analyser modules (100B, 100C), a quality of service measurement;
sending the result of the performed quality of service measurement over a packet connection to the local analyser module (100A);
measuring, by the local analyser module (100A), quality of service from at least one interface of the data transmission system (221); and
combining the quality of service measurement results received from the one or more remote analyser modules with the measured quality of service for forming a quality of service value of at least one interface of the data transmission system (221).

19. The computer program product of claim 18, the computer program product including at least one of the following media: a computer readable medium, a program storage medium, a record medium, a computer readable memory, a computer readable software distribution package, a computer readable signal, a computer readable telecommunications signal, and a computer readable compressed software package.

## Patentansprüche

1. Protokollanalysatoranordnung, die mehr als ein Analysatormodul (100A, 100B, 100C) besitzt, wobei die Analysatoranordnung folgendes aufweist:
- mindestens eine Verarbeitungseinheit (110) in jedem der Analysatormodule zum Steuern von Funktionen des Analysatormoduls;
- eine mit der Verarbeitungseinheit gekoppelte Datentransfereinheit (106) zum Austauschen von Daten mit einem Datenübertragungssystem (221) in mindestens einem Analysatormodul; und
- eine mit der Verarbeitungseinheit gekoppelte Kommunikationseinheit (108) für die Kommunikation mit einer oder mehreren anderen Kommunikationseinheiten des mehr als einen Analysatormoduls, wobei die mehr als ein Analysatormodule eine Gruppe von Analysatormodulen (210) bilden;
- wobei eine Verarbeitungseinheit (110) von irgendeinem der Analysatormodule der Gruppe von Analysatormodulen dafür konfiguriert ist, Verarbeitungsressourcen des Analysatormoduls mit einem oder mehreren anderen Analysatormodulen in der Gruppe von Analysatormodulen (210) zu teilen;
**dadurch gekennzeichnet,**
**daß** es sich bei mindestens einem von den mehr als einem Analysatormodulen um ein lokales Analysatormodul (100A) handelt und daß es sich bei mindestens einem der mehr als einem Analysatormodule um ein entferntes Analysatormodul (100B) handelt,
**daß** das lokale Analysatormodul (100A) dafür konfiguriert ist, eine Anforderung für die Verwendung von Verarbeitungsressourcen von einem oder mehreren der entfernten Analysatormodulen (100B, 100C) an ein oder mehrere entfernte Analysatormodule (100B, 100C) zu schicken,
**daß** das eine oder die mehreren entfernten Analysatormodule (100B, 100C) mit einem zu testenden Datenübertragungssystem (221) unter Verwendung eines Paketdatenmodems (118) verbunden werden und dafür konfiguriert sind, eine Servicequalitätsmessung auszuführen sowie das Resultat der Servicequalitätsmessung über eine Paketverbindung zu dem lokalen Analysatormodul (100A) zu schicken,
und **daß** das lokale Analysatormodul (100A) dafür konfiguriert ist, die Servicequalität von mindestens einer Schnittstelle des Datenübertragungssystems (221) zu messen und die von dem einen oder den mehreren der entfernten Analysatormodulen empfangenen Servicequalitätsmessungsresultate mit der gemessenen Servicequalität zu kombinieren, um einen Servicequalitätswert der mindestens einen Schnittstelle des Datenübertragungssystems (221) zu bilden.

2. Analysatoranordnung nach Anspruch 1,
**dadurch gekennzeichnet,**
**daß** das lokale Analysatormodul (100A) ferner dafür konfiguriert ist, von einem oder mehreren der entfernten Analysatormodulen (100B, 100C) in der Gruppe der Analysatormodule angemeldete Subskriptionsdaten zu empfangen und Daten auf der Basis der empfangenen Subskriptionsdaten zu verarbeiten.

3. Analysatoranordnung nach Anspruch 2,
**dadurch gekennzeichnet,**
**daß** das lokale Analysatormodul (100A) ferner dafür konfiguriert ist, von einem oder mehreren der entfernten Analysatormodulen (100B, 100C) in der Gruppe der Analysatormodule empfangene Daten zu verarbeiten.

4. Analysatoranordnung nach Anspruch 1,
**dadurch gekennzeichnet,**
**daß** das lokale Analysatormodul (100A) ferner dafür konfiguriert ist, eine Anforderung für die Verwendung von Verarbeitungsressourcen von einem oder mehreren der lokalen Analysatormodulen (100B, 100C) an ein oder mehrere lokale Analysatormodule in der Gruppe der Analysatormodule zu schicken.

5. Analysatoranordnung nach Anspruch
**dadurch gekennzeichnet,**
**daß** es sich bei mindestens einem der mehr als einem Analysatormodule um eine lokale Datenquelle handelt und daß es sich bei mindestens einem der mehr als einem Analysatormodule um eine entferne Datenquelle handelt, und wobei jedes Analysatormodul ferner eine Synchronisationseinheit (408) zum Synchronisieren der Datenkommunikation zwischen lokalen und entfernten Datenquellen in Abhängigkeit von Nachrichtenzeitstempeln aufweist.

6. Analysatoranordnung nach Anspruch 1,
**dadurch gekennzeichnet,**
**daß** die Analysatoranordnung ferner ein Eingabe-Untersystem (330), ein Decodier-Untersystem (320) und ein Analyse-Untersystem (310) in einem oder mehreren der mehr als einem Analysatormodule (100A, 100B, 100C) aufweist.

7. Analysatoranordnung nach Anspruch 6,
**dadurch gekennzeichnet,**
**daß** sich mindestens eines von dem Eingabe-Untersystem (330), dem Decodier-Untersystem (320) und dem Analyse-Untersystem (310) in einem anderen Analysatormodul (100A, 100B, 100C) als die anderen Untersysteme befindet.

8. Analysatoranordnung nach Anspruch 6,
**dadurch gekennzeichnet,**
**daß** sich zumindest ein Teil des Eingabe-Untersystems (330), des Decodier-Untersystems (320) und des Analyse-Untersystems (310) in mehr als einem Analysatormodul (100A, 100B, 100C) befindet.

9. Analysatoranordnung nach Anspruch 1,
**dadurch gekennzeichnet,**
**daß** mindestens ein Analysatormodul in der Gruppe der Analysatormodule eine Benutzerschnittstelleneinheit (116) zum Empfangen einer Benutzereingabe aufweist.

10. Verfahren zum Verwalten von Ressourcen einer Protokollanalysatoranordnung,
wobei das Verfahren folgende Schritte aufweist:
- Bereitstellen von mehr als einem Analysatormodul (100A, 100B, 100C) in einer Protokollanalysatoranordnung;
- Austauschen von Daten mit einem Datenübertragungssystem durch mindestens eines der Analysatormodule der Protokollanalysatoranordnung;
- durch jedes der Analysatormodule erfolgende Kommunikation (1102, 1106, 1108) mit einem oder mehreren anderen Analysatormodulen, wobei die mehr als ein Analysatormodule eine Gruppe von Analysatormodulen bilden; und
- gemeinsame Nutzung (1208, 1406, 1408) von Verarbeitungsressourcen eines Analysatormoduls mit einem oder mehreren anderen Analysatormodulen in der Gruppe der Analysatormodule;
**dadurch gekennzeichnet,**
**daß** es sich bei mindestens einem der mehr als einem Analysatormodule um ein lokales Analysatormodul (100A) handelt und daß es sich bei mindestens einem der mehr als einem Analysatormodule um ein entferntes Analysatormodul (100B) handelt,
und **daß** das Verfahren ferner folgende Schritte aufweist:
- von einem lokalen Analysatormodul (100A) erfolgendes Senden einer Anforderung für die Verwendung von Verarbeitungsressourcen von einem oder mehreren der entfernten Analysatormodulen (100B, 100C) an eines oder mehrere der entfernten Analysatormodule;
- Verbinden des einen oder der mehreren Analysatormodule (100B, 100C) mit einem zu testenden Datenübertragungssystem (221) unter Verwendung eines Paketdatenmodems (118);
- durch das eine oder die mehreren entfernten Analysatormodule (100B, 100C) erfolgendes Ausführen einer Servicequalitätsmessung;
- Senden des Resultats der ausgeführten Servicequalitätsmessung über eine Paketverbindung zu dem lokalen Analysatormodul (100A);
- durch das lokale Analysatormodul (100A) erfolgendes Messen der Servicequalität von mindestens einer Schnittstelle des Datenübertragungssystems (221); und
- Kombinieren der von dem einen oder den mehreren entfernten Analysatormodulen empfangenen Servicequalitätsmessungsresultate mit der gemessenen Servicequalität zum Bilden eines Servicequalitätswerts von mindestens einer Schnittstelle des Datenübertragungssystems (221).

11. Verfahren nach Anspruch 10,
**gekennzeichnet durch** das in einem lokalen Analysatormodul (100A) erfolgende Empfangen von Subskriptionsdaten, die von einem oder mehreren der entfernten Analysatormodulen (100A, 100B) angemeldet werden, und das Verarbeiten von Daten auf der Basis der empfangenen Subskriptionsdaten in dem lokalen Analysatormodul (100A).

12. Verfahren nach Anspruch 11,
**gekennzeichnet durch** in einem lokalen Analysatormodul (100A) erfolgendes Analysieren der von dem mindestens einen entfernten Analysatormodul (100B, 100C) empfangenen Subskriptionsdaten.

13. Verfahren nach Anspruch 10,
**gekennzeichnet durch** das Ausstatten jedes Analysatormoduls mit einer Synchronisationseinheit (408) zum Synchronisieren der Datenkommunikation zwischen lokalen und entfernten Datenquellen in Abhängigkeit von Nachrichtenzeitstempeln.

14. Verfahren nach Anspruch 10,
**gekennzeichnet durch** das Bereitstellen eines Eingabe-Untersystems (330), eines Decodier-Untersystems (320) und eines Analyse-Untersystems (310) in einem oder mehreren des mehr als einen Analysatormoduls (100A, 100B, 100C).

15. Verfahren nach Anspruch 10,
**gekennzeichnet durch** das Bereitstellen von mindestens einem von dem Eingabe-Untersystem (330), dem Decodier-Untersystem (320) und dem Analyse-Untersystem (310) in einem anderen Analysatormodul (100A, 100B, 100C) als demjenigen, in dem sich die anderen Untersysteme befinden.

16. Verfahren nach Anspruch 10,
**gekennzeichnet durch** das Vorsehen von zumindest einem Teil des Eingabe-Untersystems (330), des Decodier-Untersystems (320) und des Analyse-Untersystems (310) in mehr als einem Analysatormodul (100A, 100B, 100C).

17. Verfahren nach Anspruch 10,
**gekennzeichnet durch** das Vorsehen einer Benutzerschnittstelleneinheit (116) zum Empfangen einer Benutzereingabe in mindestens einem Analysatormodul in der Gruppe der Analysatormodule.

18. Computerprogrammprodukt zum Codieren eines Computerprogramms mit Instruktionen zum Ausführen eines Computervorgangs zum Verwalten von Ressourcen einer Protokollanalysatoranordnung,
wobei der Vorgang folgendes aufweist:
- Bereitstellen von mehr als einem Analysatormodul (100A, 100B, 100C) in einer Protokollanalysatoranordnung;
- Austauschen von Daten mit einem Datenübertragungssystem durch mindestens eines der Analysatormodule der Protokollanalysatoranordnung;
- durch jedes der Analysatormodule erfolgende Kommunikation (1102, 1106, 1108) mit einem oder mehreren anderen Analysatormodulen, wobei die mehr als ein Analysatormodule eine Gruppe von Analysatormodulen bilden; und
- gemeinsame Nutzung (1208, 1406, 1408) von Verarbeitungsressourcen des Analysatormoduls mit einem oder mehreren anderen Analysatormodulen in der Gruppe der Analysatormodule;
**dadurch gekennzeichnet,**
**daß** es sich bei mindestens einem der mehr als einem Analysatormodule um ein lokales Analysatormodul (100A) handelt und daß es sich bei mindestens einem der mehr als einem Analysatormodule um ein entferntes Analysatormodul (100B) handelt,
und **daß** das Verfahren ferner folgende Schritte aufweist:
- von einem lokalen Analysatormodul (100A) erfolgendes Senden einer Anforderung für die Verwendung von Verarbeitungsressourcen von einem oder mehreren entfernten Analysatormodulen (100B, 100C) an eines oder mehrere der entfernten Analysatormodule;
- Verbinden des einen oder der mehreren Analysatormodule (100B, 100C) mit einem zu testenden Datenübertragungssystem (221) unter Verwendung eines Paketdatenmodems (118);
- durch das eine oder die mehreren entfernten Analysatormodule (100B, 100C) erfolgendes Ausführen einer Servicequalitätsmessung;
- Senden des Resultats der ausgeführten Servicequalitätsmessung über eine Paketverbindung zu dem lokalen Analysatormodul (100A);
- durch das lokale Analysatormodul (100A) erfolgendes Messen der Servicequalität von mindestens einer Schnittstelle des Datenübertragungssystems (221); und
- Kombinieren der von dem einen oder den mehreren der entfernten Analysatormodulen empfangenen Servicequalitätsmessungsresultate mit der gemessenen Servicequalität zum Bilden eines Servicequalitätswerts von mindestens einer Schnittstelle des Datenübertragungssystems (221).

19. Computerprogrammprodukt nach Anspruch 18,
wobei das Computerprogrammprodukt mindestens eines der im folgenden genannten Medien beinhaltet: ein computerlesbares Medium, ein Programmspeichermedium, ein Aufzeichnungsmedium, einen computerlesbaren Speicher, ein computerlesbares Softwarevertriebspaket, ein computerlesbares Signal, ein computerlesbares Telekommunikationssignal und ein computerlesbares komprimiertes Softwarepaket.

## Revendications

1. Agencement d'analyseur de protocole, comprenant plus d'un module d'analyseur (100A, 100B, 100C), incluant :
au moins une unité de traitement (110) pour commander des fonctions du module d'analyseur dans chacun des modules d'analyseur ;
une unité de transfert de données (106) couplée à l'unité de traitement pour communiquer des données avec un système de transmission de données (221) dans au moins un module d'analyseur ; et
une unité de communication (108) couplée à l'unité de traitement pour communiquer avec une ou plusieurs autres unités de communication des plus d'un module d'analyseur, les plus d'un module d'analyseur formant une grappe de modules d'analyseur (210) ;
et une unité de traitement (110) de tout module d'analyseur de la grappe de modules d'analyseur est configurée pour partager des ressources de traitement du module d'analyseur avec un ou plusieurs autres modules d'analyseur dans la grappe de modules d'analyseur ;
**caractérisé en ce qu'**au moins l'un des plus d'un module d'analyseur est un module d'analyseur local (100A) et au moins un des plus d'un module d'analyseur est un module d'analyseur distant (100B),
le module d'analyseur local (100A) est configuré pour envoyer une demande à un ou plusieurs modules d'analyseur distants (100B, 100C) pour utiliser des ressources de traitement du ou des modules d'analyseur distants (100B, 100C),
le ou les modules d'analyseur distants (100B, 100C) sont connectés à un système de transmission de données (221) à l'essai à l'aide d'un modem de données par paquets (118), et configurés pour réaliser une mesure de qualité de service et envoyer le résultat de la mesure de qualité de service réalisée sur une connexion de paquets vers le module d'analyseur local (100A),
et le module d'analyseur local (100A) est configuré pour mesurer la qualité de service d'au moins une interface du système de transmission de données (221) et pour combiner les résultats de mesure de qualité de service reçus du ou des modules d'analyseur distants avec la qualité de service mesurée pour former une valeur de qualité de service de la au moins une interface du système de transmission de données (221).

2. Agencement d'analyseur selon la revendication 1, **caractérisé en ce que** le module d'analyseur local (100A) est en outre configuré pour recevoir des données d'abonnement souscrites par un ou plusieurs modules d'analyseur distants (100B, 100C) dans la grappe de modules d'analyseur et pour traiter les données d'après les données d'abonnement reçues.

3. Agencement d'analyseur selon la revendication 2, **caractérisé en ce que** le module d'analyseur local (100A) est en outre configuré pour analyser des données reçues d'un ou plusieurs modules d'analyseur distants (100B, 100C) dans la grappe de modules d'analyseur.

4. Agencement d'analyseur selon la revendication 1, **caractérisé en ce que** le module d'analyseur local (100A) est en outre configuré pour envoyer une demande à un ou plusieurs modules d'analyseur distants (100B, 100C) dans la grappe de modules d'analyseur pour utiliser des ressources de traitement du ou des modules d'analyseur distants.

5. Agencement d'analyseur selon la revendication 1, **caractérisé en ce qu'**au moins l'un des plus d'un module d'analyseur est une source de données locale et qu'au moins l'un des plus d'un module d'analyseur est une source de données distante, et dans lequel chaque module d'analyseur inclut en outre une unité de synchronisation (408) pour synchroniser une communication de données entre des sources de données locale et distante selon un horodatage des messages.

6. Agencement d'analyseur selon la revendication 1, **caractérisé en ce que** l'agencement d'analyseur comprend en outre un sous-système d'entrée (330), un sous-système de décodage (320) et un sous-système d'analyse (310) dans un ou plus des plus d'un module d'analyseur (100A, 100B, 100C).

7. Agencement d'analyseur selon la revendication 6, **caractérisé en ce qu'**au moins l'un du sous-système d'entrée (330), du sous-système de décodage (320) et du sous-système d'analyseur (310) réside dans un module d'analyse (100A, 100B, 100C) différent des autres sous-systèmes.

8. Agencement d'analyseur selon la revendication 6, **caractérisé en ce qu'**au moins une partie du sous-système d'entrée (330), du sous-système de décodage (320) ou du sous-système d'analyse (310) réside dans plus d'un module d'analyseur (100A, 100B, 100C).

9. Agencement d'analyseur selon la revendication 1, **caractérisé en ce qu'**au moins un module d'analyseur dans la grappe de modules d'analyseur comprend une unité d'interface utilisateur (116) pour recevoir une entrée d'utilisateur.

10. Procédé de gestion des ressources d'un agencement d'analyseur de protocole, le procédé comprenant :
la fourniture de plus d'un module d'analyseur (100A, 100B, 100C) dans un agencement d'analyseur de protocole ;
la communication de données avec un système de transmission de données par au moins un des modules d'analyseur de l'agencement d'analyseur de protocole ;
la communication (1102, 1106, 1108) par chaque module d'analyseur, avec un ou plusieurs autres modules d'analyseur, les plus d'un module d'analyseur formant une grappe de modules d'analyseur ; et
le partage (1208, 1406, 1408) de ressources de traitement d'un module d'analyseur avec un ou plusieurs autres modules d'analyseur dans la grappe de modules d'analyseur ;
**caractérisé en ce qu'**au moins un des plus d'un module d'analyseur est un module d'analyseur local (100A) et au moins un des plus d'un module d'analyseur est un module d'analyseur distant (100B), et le procédé comprend en outre :
l'envoi, par un module d'analyseur local (100A), d'une demande à un ou plusieurs modules d'analyseur distants (100B, 100C) d'utilisation de ressources de traitement du ou des modules d'analyseur distants ;
la connexion du ou des modules d'analyseur distants (100B, 100C) à un système de transmission de données (221) à l'essai à l'aide d'un modem de données par paquets (118) ;
la réalisation, par le ou les modules d'analyseur distants (100B, 100C), d'une mesure de qualité de service ;
l'envoi du résultat de la mesure de qualité de service réalisée sur une connexion par paquets au module d'analyseur local (100A) ;
la mesure, par le module d'analyseur local (100A), de la qualité de service d'au moins une interface du système de transmission de données (221) ; et
la combinaison des résultats de mesure de qualité de service reçus du ou des modules d'analyseur distants avec la qualité de service mesurée pour former une valeur de qualité de service d'au moins une interface du système de transmission de données (221).

11. Procédé selon la revendication 10, **caractérisé par** la réception, dans un module d'analyseur local (100A), de données d'abonnement souscrites par un ou plusieurs modules d'analyseur distants (100A, 100B), et le traitement de données d'après les données d'abonnement reçues dans le module d'analyseur local (100A).

12. Procédé selon la revendication 11, **caractérisé par** l'analyse, dans un module d'analyseur local (100A), des données d'abonnement reçues du au moins un module d'analyseur distant (100B, 100C).

13. Procédé selon la revendication 10, **caractérisé par** la fourniture à chaque module d'analyseur d'une unité de synchronisation (408) pour synchroniser une communication de données entre des sources de données locale et distante selon un horodatage des messages.

14. Procédé selon la revendication 10, **caractérisé par** la fourniture d'un sous-système d'entrée (330), d'un sous-système de décodage (320) et d'un sous-système d'analyse (310) dans un ou plusieurs des plus d'un module d'analyseur (100A, 100B, 100C).

15. Procédé selon la revendication 10, **caractérisé par** la fourniture d'au moins l'un du sous-système d'entrée (330), du sous-système de décodage (320) et du sous-système d'analyse (310) dans un module d'analyseur (100A, 100B, 100C) différent de l'endroit où se trouvent les autres sous-systèmes.

16. Procédé selon la revendication 10, **caractérisé par** la fourniture d'au moins une partie du sous-système d'entrée (330), du sous-système de décodage (320) ou du sous-système d'analyse (310) dans plus d'un module d'analyseur (100A, 100B, 100C).

17. Procédé selon la revendication 10, **caractérisé par** la fourniture d'une unité d'interface utilisateur (116) pour recevoir une entrée d'utilisateur dans au moins un module d'analyseur dans la grappe de modules d'analyseur.

18. Produit de programme informatique codant un programme informatique d'instructions pour exécuter un processus informatique pour gérer des ressources d'un agencement d'analyseur de protocole, le processus comprenant :
la fourniture de plus d'un module d'analyseur (100A, 100B, 100C) dans un agencement d'analyseur de protocole ;
la communication de données avec un système de transmission de données par au moins un des modules d'analyseur de l'agencement d'analyseur de protocole ;
la communication par chaque module d'analyseur, avec un ou plusieurs autres modules d'analyseur, les plus d'un module d'analyseur formant une grappe de modules d'analyseur ;
le partage de ressources de traitement d'un module d'analyseur avec un ou plusieurs autres modules d'analyseur dans la grappe de modules d'analyseur ;
**caractérisé en ce qu'**au moins un des plus d'un module d'analyseur est un module d'analyseur local (100A) et au moins un des plus d'un module d'analyseur est un module d'analyseur distant (100B), et le procédé comprend en outre :
l'envoi, par un module d'analyseur local (100A), d'une demande à un ou plusieurs modules d'analyseur distants (100B, 100C) d'utilisation de ressources de traitement du ou des modules d'analyseur distants ;
la connexion du ou des modules d'analyseur distants (100B, 100C) à un système de transmission de données (221) à l'essai à l'aide d'un modem de données par paquets (118) ;
la réalisation, par le ou les modules d'analyseur distants (100B, 100C), d'une mesure de qualité de service ;
l'envoi du résultat de la mesure de qualité de service réalisée sur une connexion par paquets au module d'analyseur local (100A) ;
la mesure, par le module d'analyseur local (100A), de la qualité de service d'au moins une interface du système de transmission de données (221) ; et
la combinaison des résultats de mesure de qualité de service reçus du ou des modules d'analyseur distants avec la qualité de service mesurée pour former une valeur de qualité de service d'au moins une interface du système de transmission de données (221).

19. Produit de programme informatique selon la revendication 18, le produit de programme informatique incluant au moins un des supports suivants : un support lisible par ordinateur, un support de stockage de programme, un support d'enregistrement, une mémoire lisible par ordinateur, un progiciel de distribution lisible par ordinateur, un signal lisible par ordinateur, un signal de télécommunications lisible par ordinateur et un progiciel compressé lisible par ordinateur.
